# FASCICULE DE BREVET EUROPEEN

(11) **EP 2 470 971 B1**
(45) Date de publication et mention de la délivrance du brevet: **05.11.2014**
(21) Numéro de dépôt: 10752853.1
(22) Date de dépôt: 28.07.2010
(51) Int. Cl.: G05D 1/02, B62D 1/26

(54) **PROCÉDÉ ET DISPOSITIF DE GUIDAGE D'UN VÉHICULE PAR RAPPORT A UNE CATÉNAIRE**
VERFAHREN UND EINRICHTUNG ZUR FAHRREGELUNG BEZÜGLICH EINER OBERLEITUNG
METHOD AND APPARATUS FOR GUIDING A VEHICLE IN RESPECT TO OVERHEAD WIRES

(30) Priorité: 25.08.2009 FR 0904036
(43) Date de publication de la demande: 04.07.2012
(73) Titulaire: Clerc, Alain, 94110 Arcueil (FR)
(72) Inventeur: Clerc, Alain, 94110 Arcueil (FR)
(74) Mandataire: Flavenot, Bernard
(86) Numéro de dépôt international: PCT/FR2010/000549
(87) Numéro de publication internationale: WO 2011/023860

(56) Documents cités:
- EP-A1- 0 132 908
- EP-A1- 0 135 001
- EP-A1- 0 290 022
- EP-A2- 2 165 917

## Description

La présente invention concerne les procédés pour guider un véhicule devant se déplacer suivant une trajectoire virtuelle prédéfinie sur un sol, par rapport à au moins une caténaire placée en hauteur au-dessus de ce sol, lorsque d'une part cette caténaire constitue une borne de la source d'alimentation en énergie électrique du véhicule, et d'autre part le véhicule est relié à cette caténaire au moyen d'une perche de prise de courant électrique et comporte des moyens pour commander sa direction de déplacement sur le sol.

La présente invention concerne aussi les dispositifs permettant de mettre en oeuvre les procédés définis ci-dessus.

On connaît déjà des procédés pour guider de façon automatique des véhicules terrestres se déplaçant sur pneumatiques, comme ceux décrits dans le EP-A-132 908 et le EP-A-290 022.

Ces procédés généralement mis en oeuvre par rapport à des références fixes optiques, électromagnétiques, satellitaires et/ou mécaniques permettent de diminuer le nombre de personnes conduisant de tels véhicules, et aussi d'augmenter la sécurité générale.

L'un de ces procédés utilise un guidage par rapport à une bande de peinture tracée sur le sol, à l'aide d'un capteur constitué d'une batterie de cellules photosensibles qui effectuent un balayage dans la zone probable du sol portant cette bande. Ce procédé est par exemple utilisé dans les aires de stockage des véhicules concernés. Il donne de bons résultats, mais pour des trajets relativement courts. De plus, il requiert une bonne propreté du sol dans la zone comportant la bande de peinture, et aussi dans les zones environnantes pour que la bande se distingue parfaitement et soit donc clairement lisible par les cellules photosensibles.

Ce guidage optique décrit ci-dessus a subi de nombreuses évolutions depuis ses débuts. Notamment, le capteur a été remplacé par une caméra qui peut lire le paysage dans deux dimensions et se repérer sur des marqueurs particuliers qu'elle est apte à reconnaître après un traitement d'images.

On connaît aussi le procédé de guidage qui utilise un fil émetteur ou une succession de balises implantées dans ou sur le sol. C'est ce procédé de pilotage qui a été par exemple choisi dans le programme d'expérimentation "Path" à San Diego aux U.S.A pour conduire automatiquement des véhicules sur une autoroute. Ce procédé induit en fait un dispositif globalement très coûteux car il faut équiper toutes les voies avec des balises espacées d'environ un mètre les unes des autres.

Il existe aussi un procédé de guidage par référence à des balises satellitaires plus connu sous la dénomination "guidage par G.P.S." La précision obtenue avec ce procédé n'est pas encore assez grande et, en outre, sa mise en oeuvre est souvent perturbée par les obstacles et les mauvaises conditions météorologiques.

Un autre procédé consiste à guider le véhicule par double référence matérielle implantée latéralement à la voie de circulation. Tel est le cas du métro sur pneus de la ville de Paris (France), les rails de guidage agissant directement sur le boggie du véhicule sans dispositif d'assistance complémentaire. Le guidage est précis et fiable, mais ce procédé coûte très cher car le dispositif pour sa mise en oeuvre doit être très résistant et impose l'utilisation de boggies sur le véhicule.

Un autre procédé connu n'utilise qu'une seule référence matérielle implantée au sol. C'est le cas du tramway sur pneu de Clermont-Ferrand (France) qui utilise ce procédé pour des raisons historiques. Mais il exige que cette référence soit en permanence libre de tout obstacle.

Il existe aussi un procédé d'apprentissage de conduite pour un automate associé à un véhicule. Mais il ne permet de guider correctement le véhicule que sur quelques centaines de mètres. Au-delà, le véhicule dérive et doit être recalé à partir de balises disposées, par sécurité, par exemple tous les cents mètres, ce qui en limite l'utilisation notamment à de petites distances.

Or, actuellement, on prévoit d'utiliser des véhicules dits "autoroutes-électriques" devant se déplacer sur de très grandes distances, qui seront alimentés en énergie électrique à partir de caténaires situées en hauteur par rapport au sol, sans être guidés par des rails ou analogues. Il est donc impératif que ces véhicules puissent suivre une trajectoire virtuelle relativement bien définie pour, par exemple, ne pas s'éloigner de la caténaire, ou des deux caténaires, afin d'être constamment alimentés en énergie électrique.

Aussi, la présente invention a-t-elle pour but de mettre en oeuvre un procédé pour guider un véhicule suivant une trajectoire virtuelle prédéfinie sur un sol, par rapport à au moins une caténaire placée en hauteur au-dessus de ce sol, lorsque, d'une part cette caténaire constitue une borne de la source d'alimentation en énergie électrique du véhicule, et d'autre part le véhicule est relié à cette caténaire au moyen d'une perche de prise de courant électrique et comporte des moyens pour commander sa direction de déplacement sur le sol, qui pallie les inconvénients notamment des procédés de l'art antérieur rappelés ci-avant.

La présente invention a aussi pour but de réaliser un dispositif permettant de mettre en oeuvre le procédé selon l'invention.

Plus précisément, la présente invention a pour objet un procédé pour guider un véhicule sur une trajectoire virtuelle prédéfinie sur un sol, par rapport à au moins une caténaire placée en hauteur au-dessus du sol, cette caténaire constituant l'une des bornes de la source d'alimentation en énergie électrique du dit véhicule pour le déplacer, ledit véhicule étant relié à la caténaire au moyen d'une perche de prise de courant et comportant des moyens pour commander sa direction de déplacement sur le sol, tel que défini dans la revendication 1 annexée.

La présente invention a également pour objet un dispositif permettant de mettre en oeuvre le procédé selon l'invention, tel que défini dans la revendication 6 annexée.

D'autres caractéristiques et avantages de la présente invention apparaîtront au cours de la description suivante donnée en regard des dessins annexés à titre illustratif mais nullement limitatif, dans lesquels :
Les figures 1 à 3 représentent trois vues schématiques de deux modes de réalisation d'une partie du dispositif selon l'invention permettant de mettre en oeuvre le procédé selon l'invention et d'expliciter cette mise en oeuvre, et
La figure 4 est un bloc diagramme d'un mode de réalisation du dispositif selon l'invention en accord avec les figures 1 à 3.

La présente invention concerne un procédé pour guider un véhicule 10 sur une trajectoire virtuelle prédéfinie 20 sur un sol 30, par rapport à au moins une caténaire 40 placée en hauteur au-dessus du sol et, en général aussi, bien au-dessus du point le plus haut du véhicule.

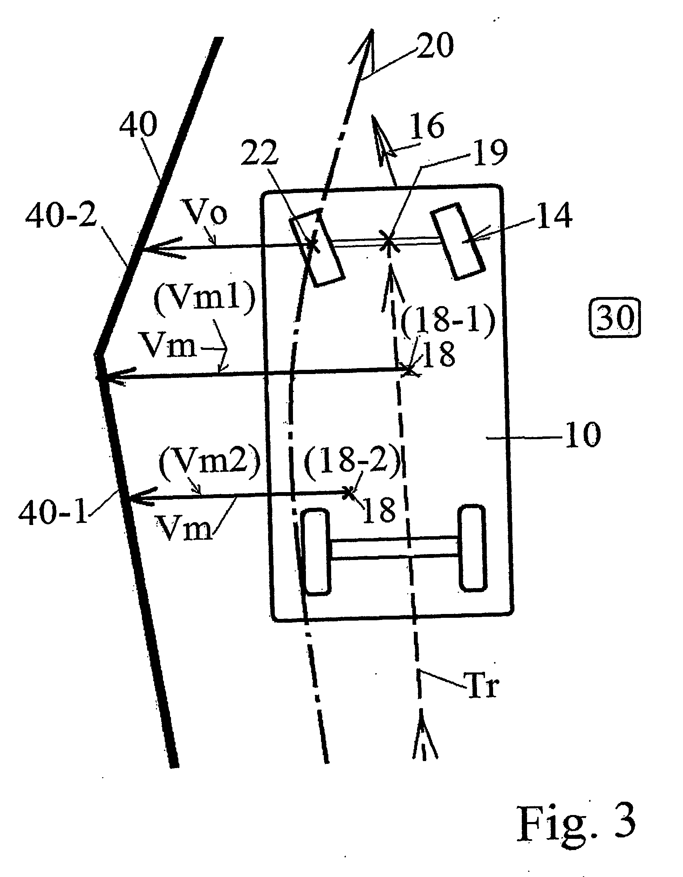

Par "guidage du véhicule sur une trajectoire virtuelle", on entend "guidage du véhicule en maintenant un point référence 19 de ce véhicule sur cette trajectoire virtuelle", par exemple le point représenté sur la figure 3 à égale distance des deux roues du train avant.

La caténaire 40 constitue l'une des bornes de la source d'alimentation en énergie électrique du véhicule 10 pour actionner son moteur et donc pour permettre le déplacement du véhicule, deux caténaires étant en fait généralement nécessaires pour ce type de véhicule se déplaçant sur pneumatiques.

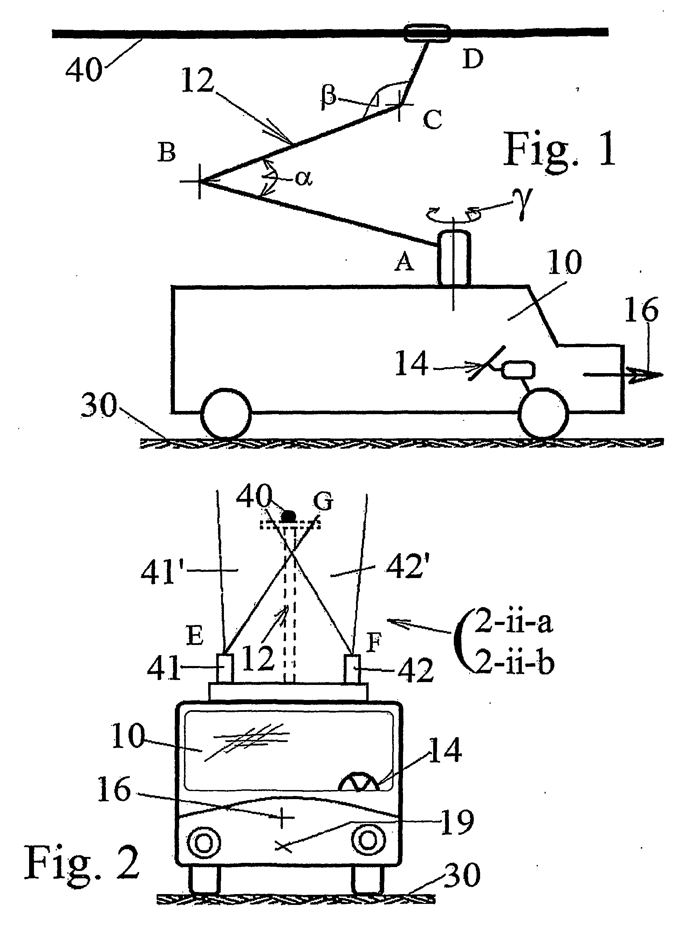

Pour ce faire, de façon connue en soit, le véhicule est relié à la caténaire au moyen d'une perche de prise de courant électrique 12 qui, comme illustré sur la figure 1, peut être réalisée en plusieurs tronçons raccordés les uns aux autres au moyen de rotules ou analogues commandables par vérins ou analogues.

De plus, en général, les caténaires sont constituées de portions de lignes électriques rectilignes 40-1, 40-2, ... qui, lorsqu'elles ne sont pas alignées, forment des angles saillants comme représenté sur la figure 3. En revanche, la trajectoire virtuelle prédéfinie 20 ne peut être qu'une ligne rectiligne ou courbe, sans angles saillants, comme celle représentée en traits-points sur la figure 3.

Un tel véhicule est en général, pour le cas de la présente invention, monté sur pneumatiques ce qui lui permet de choisir librement sa direction de déplacement. Il comporte donc des moyens 14 pour commander sa direction de déplacement 16 sur le sol 30. Ces moyens bien connus en eux-mêmes sont très schématiquement constitués d'un volant de direction monté en coopération avec au moins l'un des deux trains de roues orientable au moyen d'une crémaillère ou analogue, par exemple le train de roues avant.

Le procédé selon l'invention pour guider un tel véhicule consiste, par référence à toutes les figures mais plus particulièrement à la figure 3, à mesurer, à un instant t, la distance entre un point 18 du véhicule et la caténaire 40, cette distance ayant une valeur Vm représentée sous la forme d'un premier vecteur. Ce point 18 sera dénommé ci-après "premier point",

Il consiste aussi à déterminer, à cet instant t, la distance entre la caténaire 40 et un point 22, dit ci-après "second point", de la trajectoire virtuelle prédéfinie 20, ce second point 22 étant le point de la trajectoire virtuelle prédéfinie où devrait se trouver normalement le véhicule, plus précisément le point référence 19, s'il avait suivi correctement cette trajectoire virtuelle 20 en fonction d'au moins un paramètre prédéterminé lié au déplacement du véhicule précédant l'instant t et/ou à sa position à cet instant t, cette distance ayant une valeur Vo représentée sous la forme d'un second vecteur.

Ces deux valeurs Vm et Vo ayant été obtenues, le procédé consiste alors à les comparer, par exemple par soustraction. Cette comparaison donne comme résultat une valeur Vc.

Le procédé consiste ensuite à commander la direction du véhicule 10 de façon que la valeur Vc tende vers une valeur de seuil prédéterminée, pour que sa trajectoire réelle Tr, représentée en pointillés sur la figure 3, vienne se superposer sur la trajectoire virtuelle 20 représentée en traits-points sur cette même figure 3, c'est-à-dire pour que le point référence 19 demeure sensiblement constamment sur la trajectoire virtuelle 20.

Cette valeur de seuil sera déterminée en fonction, par exemple, de la position du premier point 18 par rapport à la trajectoire virtuelle 20.

A titre d'exemple, si, lorsque le véhicule est idéalement sur cette trajectoire virtuelle et que, dans cette situation, le premier point 18 se situe exactement sur cette trajectoire, la valeur de seuil prédéterminée sera "zéro".

Cependant, une telle situation n'est réellement pas possible car le premier point 18 ne peut jamais être réellement situé sur la trajectoire 20. Cette valeur de seuil sera donc prédéterminée soit par calcul, soit expérimentalement.

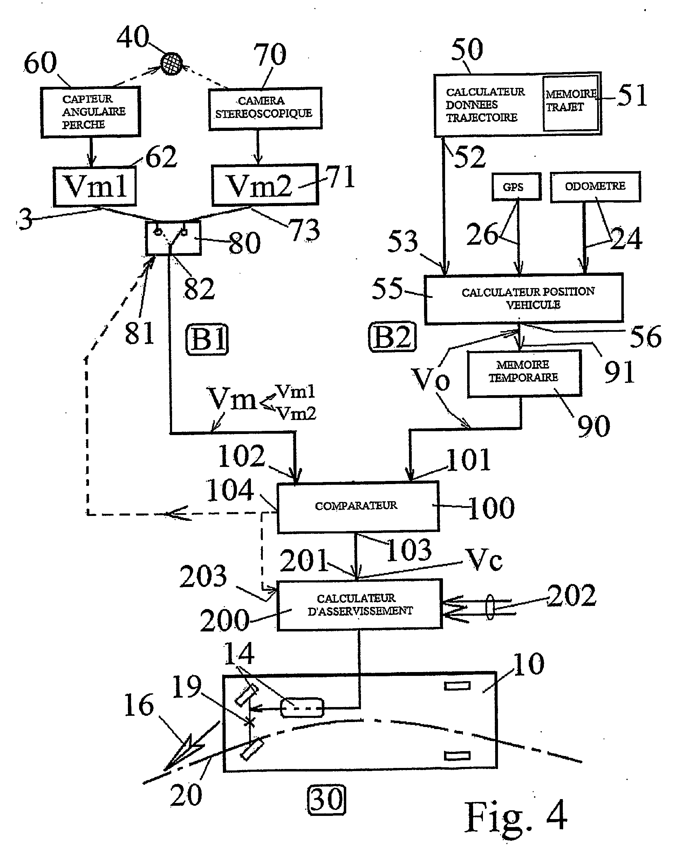

Selon une caractéristique préférentielle de l'invention, le paramètre prédéterminé lié au déplacement du véhicule ou à sa position à l'instant t, comme explicité ci-dessus, est constitué par l'un des paramètres suivants: soit (1-i) la distance parcourue par le point référence 19 à partir d'un point origine de la trajectoire virtuelle prédéfinie, déterminée par exemple au moyen d'un odomètre 24, figure 4, qui permet de façon connue de mesurer avec précision une distance parcourue par un véhicule, soit (1-ii) la position du point de référence 19 sur le sol déterminée par triangulation satellitaire au moyen du système 26 connu sous l'appellation G.P.S., soit même (1-iii) une combinaison des deux paramètres (1-i) et (1-ii) définis ci-dessus.

Selon une autre caractéristique de l'invention, la valeur Vm de la distance entre le premier point 18 et la caténaire 40 est obtenue par au moins l'un des deux processus définis ci-dessous.

Le premier (2-i) de ces deux processus consiste à déterminer la position angulaire α, β, γ de la perche 12, figure 1, par rapport au véhicule 10 et à en déduire la valeur Vm1, de Vm, entre le premier point 18, en l'occurrence le point 18-1, et la caténaire 40, par calculs trigonométriques en fonction de cette position angulaire α, β, γ et de la longueur connue de la perche 12.

Sur la figure 1, à titre d'exemple, il est représenté une perche 12 en trois tronçons articulés les uns par rapport aux autres, dont l'un est monté pivotant sur le véhicule 10.

Il faut noter que les valeurs α, β, γ sur la figure 1 représentent à la fois des valeurs d'angles entre deux tronçons consécutifs, ainsi que les moyens pour obtenir ces valeurs, ces moyens étant connus sous leur terminologie générique de "capteurs angulaires".

Il est nécessaire de préciser que, par "capteur angulaire" au sens de la présente description, il est compris tout moyen qui permet, de façon directe ou indirecte, de déterminer la position angulaire d'un corps quelconque par rapport à un autre. Un tel capteur angulaire peut être constitué de l'un de ceux qui sont proposés sur le marché sous ce vocable. Mais il peut aussi être constitué de beaucoup d'autres façons, par exemple d'un système permettant de déterminer la longueur de déplacement d'une tige de vérin par rapport à son cylindre, lorsque ce vérin commande la rotation d'un tronçon par rapport à un autre ou par rapport au véhicule 10.

Ainsi, connaissant la topologie relative aux points de liaison des vérins respectivement avec les tronçons de perche A-B, B-C et C-D et les valeurs des angles qu'ils font : γ avec le véhicule 10 ou α et β entre eux, qui sont données par les capteurs angulaires 60, figure 4, et la longueur de ces tronçons, il est possible sans difficulté de déterminer la position du point A sur le véhicule 1 par rapport au point D, et donc, en finale au moyen par exemple d'un calculateur 62, de déterminer la valeur Vm1 de la distance séparant A, c'est-à-dire le point 18-1, et la caténaire.

Quant au second (2-ii) de ces processus, il consiste à déterminer par triangulation la valeur Vm2, de Vm, de la distance entre le premier point 18, en l'occurrence le point 18-2, et la caténaire grâce à l'un des moyens suivants, figure 2 : soit (2-ii-a) une analyse d'images 41, 42 données par deux caméras stéréoscopiques 70 disposées sur le véhicule, soit (2-ii-b) le balayage de la caténaire 40 par au moins deux faisceaux lumineux 41', 42' émis par deux sources lumineuses disposées sur le véhicule, la réception des faisceaux réfléchis sur la caténaire par deux cellules photosensibles couplées respectivement aux deux sources lumineuses, et l'analyse des faisceaux émis et réfléchis pour déterminer la valeur Vm2 de la distance séparant le premier point 18-2 de la caténaire 40.

Il est à souligner que la figure 2 représente les deux moyens (2-ii-a, 2-ii-b) relatifs au second processus (2-ii) car ils sont bien connus en eux-mêmes et l'homme du métier saura aussi bien les différencier que les mettre en oeuvre pour obtenir la valeur Vm2 en sortie d'un calculateur 71.

Comme mentionné auparavant, les premiers points 18 pour le premier processus (2-ii-a) et le second processus (2-ii-b) peuvent ne pas être confondus, comme illustré sur la figure 3. Dans ce cas, le procédé utilisera deux valeurs de seuil différentes en fonction du processus utilisé.

Pour améliorer la précision du procédé, il est très avantageux que ces deux processus 2-i, 2-ii soient appliqués successivement et alternativement, à des intervalles de temps fonction par exemple de la vitesse du véhicule, de l'endroit où se trouve le véhicule, des conditions météorologiques qui règnent au moment du guidage, etc.

Ces deux processus présentent des avantages différents l'un par rapport à l'autre. Le premier est plus fiable, le second est plus précis. En conséquence, le fait de les utiliser tous les deux alternativement ne peut qu'améliorer la qualité du guidage du véhicule 10.

La présente invention concerne aussi le dispositif permettant de mettre en oeuvre le procédé défini ci-dessus dont un mode de réalisation est décrit ci-après par référence à toutes les figures 1 à 4, mais plus précisément par rapport au bloc diagramme représenté sur la figure 4 en tenant compte de ce qui a déjà été décrit ci-avant.

Ce dispositif comporte donc essentiellement des moyens pour mesurer la distance entre le premier point 18 et la caténaire, cette distance ayant une valeur Vm, des moyens pour déterminer la distance entre le second point 22 et la caténaire 40, cette distance ayant une valeur Vo, des moyens pour comparer les valeurs Vm et Vo, cette comparaison donnant une valeur Vc, et des moyens pour commander la direction du véhicule 10 de façon que la valeur Vc tende vers une valeur de seuil prédéterminée.

Selon le mode de réalisation illustré, le dispositif comporte, sur une première branche B1, un calculateur 62 qui délivre à sa sortie 63 la valeur Vm1 et un calculateur 71 qui délivre à sa sortie 73 la valeur Vm2. Ces deux sorties 63, 73 sont reliées respectivement aux deux entrées d'alimentation d'un sélecteur de variable commandable 80, par exemple un inverseur commandable à partir d'une entrée de commande 81.

Sur une seconde branche B2 en parallèle sur la première branche B1 décrite ci-dessus, le dispositif comporte de façon préférentielle une mémoire 51 embarquée à bord du véhicule 10 dans laquelle sont stockées les données définissant la trajectoire virtuelle prédéfinie 20 sur le sol 30, cette mémoire 51 étant associé à un calculateur 50 qui élabore et délivre en sortie 52 des signaux informatiques représentatifs de cette trajectoire virtuelle 20.

Cette sortie 52 est reliée à une entrée 53 d'un calculateur de position du véhicule 55, ce calculateur 5 recevant sur d'autres entrées les données élaborées par les éléments 24 et 26 définis auparavant, respectivement un odomètre et un GPS.

Au moyen d'un algorithme chargé dans ce calculateur 55, qui sera facilement élaboré par l'homme du métier par exemple suite à des tests expérimentaux, ce calculateur est apte à délivrer à sa sortie 56 la valeur Vo qui représente la position que le point référence 19 du véhicule devrait avoir sur la trajectoire virtuelle 20, comme explicité ci-avant.

Avantageusement, cette sortie 56 est reliée à l'entrée 91 d'une mémoire 90, par exemple de type temporaire, pour garder en mémoire cette valeur Vo pendant une durée prédéterminée qui est nécessaire pour réaliser la comparaison comme explicité ci-avant. Cette mémoire 90, si elle est présente, est reliée à une première entrée 101 d'un calculateur de comparaison 100 dont l'autre seconde entrée 102 est reliée à la sortie 82 du sélecteur 80, ces entrées 102, 101 constituant respectivement les sorties des deux branches B1, B2.

La sortie 103 de ce calculateur de comparaison 100 délivre la valeur de comparaison Vc définie ci-avant.

Cette sortie 103 est reliée à une entrée 201 d'un calculateur d'asservissement 200 qui reçoit, sur une ou plusieurs entrées de valeurs de seuil 202, une ou plusieurs valeurs de seuil comme explicité ci-avant. Le calculateur d'asservissement 200 délivre à sa sortie un signal qui est appliqué aux moyens 14 pour commander la direction de déplacement 16 du véhicule 10 sur le sol 30 pour tendre à ramener le point référence 19 sur la trajectoire virtuelle 20.

La commande de la direction de déplacement 16 du véhicule 10 s'effectue de préférence de façon séquentielle à des intervalles de temps très courts par rapport à la vitesse que peut atteindre le véhicule.

Ainsi, selon le principe de l'asservissement bien connu en lui-même, par des successions d'ordres à des intervalles de temps très courts, soit le point référence 19 du véhicule est ramené sur la trajectoire 20, soit il y est maintenu de façon constante.

Il est à souligner que, de façon avantageuse, pour la sécurité et la précision du fonctionnement du dispositif, le calculateur de comparaison 100 délivre à une autre sortie de commande 104 des signaux d'ordre à intervalles réguliers.

Ces signaux d'ordre sont appliqués simultanément sur l'entrée de commande 81 de l'inverseur 80 pour le commander de façon qu'il délivre à sa sortie 82 alternativement les valeurs Vm1 et Vm2, et sur une entrée de synchronisation 203 du calculateur d'asservissement 200 afin de lui permettre d'identifier laquelle des deux valeurs Vm1 et Vm2 a été utilisée pour élaborer la valeur Vc et donc d'asservir le déplacement du véhicule en fonction de la valeur de seuil correspondante.

Le fonctionnement de ce dispositif ne sera pas plus amplement décrit ici car il se déduit sans aucune difficulté de toute la description faite ci-avant, aussi bien du procédé selon l'invention que du dispositif pour la mise en oeuvre de ce procédé.

## Revendications

1. Procédé pour guider un véhicule (10) sur une trajectoire virtuelle prédéfinie (20) sur un sol (30) par rapport à au moins une caténaire (40) placée en hauteur au-dessus du sol, cette caténaire (40) constituant une borne de la source d'alimentation en énergie électrique du dit véhicule (10) pour le déplacer, ledit véhicule étant relié à la caténaire au moyen d'une perche de prise de courant (12) et comportant en outre des moyens (14) pour commander sa direction de déplacement (16) sur le sol (30), **caractérisé par le fait qu'**il consiste :
• à mesurer la distance entre un point (18), dit "premier point", du véhicule et ladite caténaire, cette distance ayant une valeur Vm,
• à déterminer la distance entre un point (22), dit "second point", de la trajectoire virtuelle prédéfinie (20) et ladite caténaire (40), ce dit second point étant le point de la trajectoire virtuelle prédéfinie où devrait se trouver normalement un point référence (19) du véhicule en fonction d'au moins un paramètre prédéterminé lié au déplacement du dit véhicule, cette distance ayant une valeur Vo,
• à comparer les valeurs Vm et Vo, cette comparaison donnant une valeur Vc, et
• à commander la direction du véhicule (10) de façon que la valeur Vc tende vers une valeur de seuil prédéterminée.

2. Procédé selon la revendication 1, **caractérisé par le fait que** le paramètre prédéterminé lié au déplacement du véhicule est constitué par l'un des paramètres suivants :
• (1-i) distance parcourue par le point référence (19) du véhicule à partir d'un point origine de ladite trajectoire virtuelle prédéfinie,
• (1-ii) position du point référence (19) du véhicule sur le sol déterminée par triangulation satellitaire,
• (1-iii) une combinaison de ces deux paramètres (1-i) et (1-ii).

3. Procédé selon l'une des revendications 1 et 2, **caractérisé par le fait que** la mesure de la distance Vm entre le premier point (18) et la caténaire (40) est effectuée selon au moins l'un des deux processus suivants :
• (2-i) mesure (Vm1) de la position angulaire (α, β, γ) de la perche (12) par rapport au véhicule (10) et détermination de la distance Vm par calcul trigonométrique en fonction de cette position angulaire et de la longueur connue de la perche (12),
• (2-ii) mesure (Vm2) par triangulation de la distance Vm grâce à l'un des moyens suivants :
* (2-ii-a) analyse d'images données par deux caméras stéréoscopiques (41, 42) disposées sur le véhicule,
* (2-ii-b) balayage de la caténaire (40) par au moins deux faisceaux lumineux (41', 42') émis par deux sources lumineuses disposées sur le véhicule, réception des faisceaux réfléchis sur la caténaire par deux cellules photosensibles couplées respectivement aux deux sources lumineuses et analyse des faisceaux émis et réfléchis pour déterminer la valeur Vm2.

4. Procédé selon la revendication 3, **caractérisé par le fait que** les deux dits processus (2-i, 2-ii) sont appliqués successivement et alternativement.

5. Procédé selon l'une des revendications précédentes, **caractérisé par le fait que** les données définissant la trajectoire virtuelle prédéfinie (20) sur le sol (30) sont stockées dans une mémoire (51) embarquée à bord du véhicule (10).

6. Dispositif permettant de mettre en oeuvre le procédé selon l'une des revendications précédentes pour guider un véhicule (10) sur une trajectoire virtuelle prédéfinie (20) sur un sol (30) par rapport à au moins une caténaire (40) placée en hauteur au-dessus du sol, cette caténaire (40) constituant une borne de la source d'alimentation en énergie électrique du dit véhicule (10) pour le déplacer, ledit véhicule étant relié à la caténaire au moyen d'une perche de prise de courant (12) et comportant en outre des moyens (14) pour commander sa direction de déplacement (16) sur le sol (30), **caractérisé par le fait qu'**il comporte:
des moyens pour mesurer la distance entre un point (18), dit "premier point", du véhicule et ladite caténaire, cette distance ayant une valeur Vm,
des moyens pour déterminer la distance entre un point (22), dit "second point", de la trajectoire virtuelle prédéfinie (20) et ladite caténaire (40), ce dit second point étant le point de la trajectoire virtuelle prédéfinie où devrait se trouver normalement un point référence (19) du véhicule en fonction d'au moins un paramètre prédéterminé lié au déplacement du dit véhicule, cette distance ayant une valeur Vo,
des moyens pour comparer les valeurs Vm et Vo, cette comparaison donnant une valeur Vc, et
des moyens pour commander la direction du véhicule (10) de façon que la valeur Vc tende vers une valeur de seuil prédéterminée.

## Patentansprüche

1. Verfahren zum Führen eines Fahrzeugs (10) auf einer im Voraus definierten virtuellen Bahn (20) auf einem Boden (30) in Bezug auf wenigstens eine Fahrleitung (40), die sich auf einer Höhe über dem Boden befindet, wobei diese Fahrleitung (40) einen Anschluss der Quelle für die Versorgung mit elektrischer Energie des Fahrzeugs (10), um es zu verlagern, bildet, wobei das Fahrzeug mit der Fahrleitung mittels einer Stromabnehmerstange (12) verbunden ist und außerdem Mittel (14) aufweist, um seine Verlagerungsrichtung (16) auf dem Boden (30) zu steuern, **dadurch gekennzeichnet, dass** es darin besteht:
- den Abstand zwischen dem Punkt (18), dem sogenannten "ersten Punkt", des Fahrzeugs und der Fahrleitung zu messen, wobei dieser Abstand einen Wert Vm hat.
- den Abstand zwischen einem Punkt (22), dem sogenannten "zweiten Punkt", der im Voraus definierten virtuellen Bahn (20) und der Fahrleitung (40), wobei dieser zweite Punkt jener Punkt der im Voraus definierten virtuellen Bahn ist, wo sich normalerweise ein Referenzpunkt (19) des Fahrzeugs befinden soll, als Funktion wenigstens eines vorgegebenen Parameters, der mit der Verlagerung des Fahrzeugs in Beziehung steht, zu bestimmen, wobei dieser Abstand einen Wert Vo hat,
- die Werte Vm und Vo zu vergleichen, wobei dieser Vergleich einen Wert Vc ergibt, und
- die Richtung des Fahrzeugs (10) in der Weise zu steuern, dass der Wert Vc zu einem vorgegebenen Schwellenwert strebt.

2. Verfahren nach Anspruch 1, **dadurch gekennzeichnet, dass** der vorgegebene Parameter, der mit der Verlagerung des Fahrzeugs in Beziehung steht, durch einen der folgenden Parameter gebildet ist:
- (1-i) Abstand, der von dem Referenzpunkt (19) des Fahrzeugs beginnend bei einem Ausgangspunkt der im Voraus definierten virtuellen Bahn durchlaufen wird,
- (1-ii) Position des Referenzpunkts (19) des Fahrzeugs auf dem Boden, die durch Satellitentriangulation bestimmt wird,
- (1-iii) Kombination aus diesen zwei Parametern (1-i) und (1-ii).

3. Verfahren nach einem der Ansprüche 1 und 2, **dadurch gekennzeichnet, dass** die Messung des Abstands Vm zwischen dem ersten Punkt (18) und der Fahrleitung (40) wenigstens gemäß einem der beiden folgenden Prozesse erfolgt:
- (2-i) Messen (Vm1) der Winkelposition (α, β, γ) der Stange (12) in Bezug auf das Fahrzeug (10) und Bestimmen des Abstands Vm durch trigonometrische Berechnung als Funktion dieser Winkelposition und der bekannten Länge der Stange (12),
- (2-ii) Messen (Vm2) durch Triangulation des Abstands Vm kraft eines der folgenden Mittel:
* (2-ii-a) Analysieren gegebener Bilder durch zwei stereoskopische Kameras (41, 42), die am Fahrzeug angeordnet sind,
* (2-ii-b) Überstreichen der Fahrleitung (40) mit wenigstens zwei Lichtstrahlenbündeln (41', 42'), die von zwei Lichtquellen ausgesendet werden, die am Fahrzeug angeordnet sind, Empfangen von Strahlenbündeln, die an der Fahrleitung reflektiert werden, durch zwei lichtempfindliche Zellen, die mit den zwei entsprechenden Lichtquellen gekoppelt sind, und Analysieren der ausgesendeten und reflektierten Strahlenbündel, um den Wert Vm2 zu bestimmen.

4. Verfahren nach Anspruch 3, **dadurch gekennzeichnet, dass** die zwei Prozesse (2-i, 2-ii) nacheinander und abwechselnd angewendet werden.

5. Verfahren nach einem der vorhergehenden Ansprüche, **dadurch gekennzeichnet, dass** die Daten, die die im Voraus definierte virtuelle Bahn (20) auf dem Boden (30) definieren, in einem Speicher (51) an Bord des Fahrzeugs (10) gespeichert sind.

6. Vorrichtung, die die Ausführung des Verfahrens nach einem der vorhergehenden Ansprüche ermöglicht,
um ein Fahrzeug (10) auf einer im Voraus definierten virtuellen Bahn (20) auf einem Boden (30) in Bezug auf wenigstens eine Fahrleitung (40), die auf einer Höhe über dem Boden angeordnet ist, zu führen, wobei diese Fahrleitung (40) einen Anschluss der Quelle für die Versorgung mit elektrischer Energie des Fahrzeugs (10), um es zu verlagern, bildet, wobei das Fahrzeug mit der Fahrleitung mittels einer Stromnehmerstange (12) verbunden ist und außerdem Mittel (14) umfasst, um seine Verlagerungsrichtung (16) auf dem Boden (30) zu steuern, **dadurch gekennzeichnet, dass** es umfasst:
Mittel zum Messen des Abstands zwischen einem Punkt (18), dem sogenannten "ersten Punkt", des Fahrzeugs und der Fahrleitung, wobei dieser Abstand einen Wert Vm hat,
Mittel, um den Abstand zwischen einem Punkt (22), dem sogenannten "zweiten Punkt", der im Voraus definierten virtuellen Bahn (20) und der Fahrleitung (40), wobei dieser zweite Punkt jener Punkt der im Voraus definierten virtuellen Bahn ist, wo sich normalerweise ein Referenzpunkt (19) des Fahrzeugs befinden soll, als Funktion wenigstens eines vorgegebenen Parameters, der mit der Verlagerung des Fahrzeugs in Beziehung steht, zu bestimmen, wobei dieser Abstand einen Wert Vo hat,
Mittel, um die Werte Vm und Vo zu vergleichen, wobei dieser Vergleich einen Wert Vc ergibt, und
Mittel, um die Richtung des Fahrzeugs (10) in der Weise zu steuern, dass der Wert Vc zu einem vorgegebenen Schwellenwert strebt.

## Claims

1. A method of guiding a vehicle (10) along a predefined virtual path (20) on ground (30) relative to at least one catenary (40) placed overhead above the ground, the catenary (40) constituting one terminal of the electrical power supply of said vehicle (10) for causing it to move, said vehicle being connected to the catenary by means of a current take-off pole (12) and also including steering means (14) for controlling its travel direction (16) on the ground (30), the method being **characterized in that** it consists:
· in measuring the distance between said catenary and a point (18) of the vehicle, referred to as a first point, said distance having a value Vm;
• in determining the distance between said catenary (40) and a point (22) of the predefined virtual path (20), referred to as a second point, said second point being the point of the predefined virtual path where a reference point (19) of the vehicle ought normally to be located as a function of at least one predetermined parameter associated with the movement of said vehicle, said distance having a value Vo;
· in comparing the values Vm and Vo, the comparison giving a value Vc; and
· in controlling the steering of the vehicle (10) in such a manner that the value Vc tends towards a predetermined threshold value.

2. A method according to claim 1, **characterized by** the fact that the predetermined parameter associated with the movement of the vehicle is constituted by any one of the following parameters':
· (1-i) the distance traveled by the reference point (19) of the vehicle from an origin point of said predefined virtual path;
· (1-ii) the position of the reference point (19) of the vehicle on the ground as determined by satellite triangulation; and
· (1-iii) a combination of these two parameters (1-i) and (1-ii).

3. A method according to claim 1 or claim 2, **characterized by** the fact that the distance Vm between the first point (18) and the catenary (40) is measured using at least one of the following two processes:
· (2-i) measuring (Vm1) the angular position (α, β, γ) of the pole (12) relative to the vehicle (10) and determining the distance Vm by trigonometrical calculation as a function of said angular position and of the known length of the pole (12); and
· (2-ii) measuring (Vm2) the distance Vm by triangulation by using either of the following means:
· (2-ii-a) analyzing images given by two stereoscopic cameras (41, 42) arranged on the vehicle; and
· (2-ii-b) scanning the catenary (40) with at least two light beams (41', 42') emitted by two light sources arranged on the vehicle, receiving beams reflected on the catenary by means of two photosensitive cells coupled respectively to the two light sources, and analyzing the transmitted and reflected beams in order to determine the value Vm2.

4. A method according to claim 3, **characterized by** the fact that said two processes (2-i, 2-ii) are performed in succession and in alternation.

5. A method according to any preceding claim, **characterized by** the fact that the data defining the predefined virtual path (20) on the ground (30) is stored in a memory (51) on board the vehicle (10).

6. A device for performing the method according to any preceding claim to guide a vehicle (10) along a predefined virtual path (20) on ground (30) relative to at least one catenary (40) placed overhead above the ground, the catenary (40) constituting one terminal of the electrical power supply of said vehicle (10) for causing it to move, said vehicle being connected to the catenary by means of a current take-off pole (12) and also including steering means (14) for controlling its travel direction (16) on the ground (30), the device being **characterized by** the fact that it comprises:
· means for measuring the distance between said catenary and a point (18) of the vehicle, referred to as a first point, said distance having a value Vm;
· means for determining the distance between said catenary (40) and a point (22) of the predefined virtual path (20), referred to as a second point, said second point being the point of the predefined virtual path where a reference point (19) of the vehicle ought normally to be located as a function of at least one predetermined parameter associated with the movement of said vehicle, said distance having a value Vo;
· means for comparing the values Vm and Vo, the comparison giving a value Vc; and
· means for controlling the steering of the vehicle (10) in such a manner that the value Vc tends towards a predetermined threshold value.
